(19) Europäisches Patentamt
European Patent Office
Office européen des brevets

(11) EP 2 640 772 B1

(12) # FASCICULE DE BREVET EUROPEEN

(45) Date de publication et mention de la délivrance du brevet:
**29.10.2014 Bulletin 2014/44**

(21) Numéro de dépôt: **11784996.8**

(22) Date de dépôt: **16.11.2011**

(51) Int Cl.:
***C08J 7/14*** *(2006.01)* ***D21H 21/16*** *(2006.01)*

(86) Numéro de dépôt international:
**PCT/EP2011/070202**

(87) Numéro de publication internationale:
**WO 2012/066015 (24.05.2012 Gazette 2012/21)**

(54) **MACHINE ET PROCEDE DE TRAITEMENT PAR GREFFAGE CHROMATOGENIQUE D'UN SUBSTRAT HYDROXYLE**

MASCHINE UND VERFAHREN ZUR BEHANDLUNG EINES HYDROXYLSUBSTRATS DURCH CHROMATOGENE PFROPFUNG

MACHINE AND METHOD FOR TREATING A HYDROXYL SUBSTRATE BY CHROMATOGENIC GRAFTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2010 FR 1059418**

(43) Date de publication de la demande:
**25.09.2013 Bulletin 2013/39**

(73) Titulaires:
- **Centre National de la Recherche Scientifique (CNRS)
75016 Paris (FR)**
- **Centre Technique Du Papier
38610 Gières (FR)**

(72) Inventeurs:
- **SAMAIN, Daniel
F-38240 Meylan (FR)**
- **GUERIN, David
F-63400 Chamalière (FR)**
- **LEMAITRE, André
F-38000 Grenoble (FR)**
- **LYANNAZ, Laurent
F-38120 Saint Egrève (FR)**
- **GUILLOUTY, Jean-Luc
F-38610 Gières (FR)**

(74) Mandataire: **Regimbeau
139, rue Vendôme
69477 Lyon Cedex 06 (FR)**

(56) Documents cités:
**WO-A1-98/14661 WO-A1-2009/083525**

- **Nicoleta Camelia Stinga: "Utilisation de la chimie chromatogénique pour la conception et la réalisation de matériaux cellulisiques barrières à l'eau, aux graisses et aux gaz", , 2 février 2010 (2010-02-02), XP002644340, Extrait de l'Internet: URL:http://tel.archives-ouvertes.fr/tel-00 452688_v1/ [extrait le 2011-06-22] & , 2 février 2010 (2010-02-02), Extrait de l'Internet: URL:http: //tel.archives-ouvertes.fr/docs/0 0/45/26/88/PDF/ These_Camelia_Stinga.pdf [extrait le 2011-06-22]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 640 772 B1

## Description

### DOMAINE DE L'INVENTION

La présente invention concerne une machine de traitement par greffage chromatogénique d'un substrat hydroxylé, et un procédé mis en oeuvre au moyen de ladite machine.

### ARRIERE PLAN DE L'INVENTION

Il a déjà été proposé des procédés pour former des films présentant des propriétés barrière vis-à-vis de l'eau, des graisses, des gaz et/ou de la vapeur d'eau.

De tels films sont particulièrement recherchés dans le domaine de l'emballage par exemple, et notamment de l'emballage alimentaire.

En particulier, le document WO 99/08784 propose de greffer des groupements hydrophobes sur un support présentant des fonctions hydrophiles.

Le document WO 2009/083525 propose plus spécifiquement de greffer un acide gras sur un film d'alcool polyvinylique (PVA), le rendant ainsi hydrophobe. Ledit film de PVA peut être accolé à un substrat que l'on veut rendre étanche.

Ces deux documents proposent de mettre en oeuvre un greffage par chimie chromatogénique.

Contrairement à la chimie dite « classique », où la réaction doit être réalisée dans un solvant capable de mettre en contact la surface du substrat et le réactif et de piéger l'acide chlorhydrique libéré, la chimie chromatogénique utilise la tension de vapeur des réactifs et un flux gazeux pour faire diffuser le réactif à l'intérieur du substrat, ce qui permet de s'affranchir de solvants.

Une réaction chromatogénique de greffage particulièrement intéressante consiste typiquement à faire réagir un substrat S hydroxylé avec un chlorure d'acide gras à longue chaîne et peut s'écrire selon la formule :

$$S-OH+RCOCl \underset{K2}{\overset{K1}{\rightleftarrows}} S-O-CO-R+HCl$$

où K1 et K2 sont respectivement les constantes de vitesse d'association et de dissociation.

A l'heure actuelle, ce procédé de greffage n'a été mis en oeuvre qu'en laboratoire.

Cependant, la chimie chromatogénique présente des avantages en termes de procédé, de sorte qu'il est maintenant souhaitable de concevoir un procédé de traitement en continu, c'est-à-dire qui puisse être mis en oeuvre sur un substrat entraîné en défilement entre des rouleaux.

En effet, en chimie chromatogénique, il n'y a pas besoin de solvant pour réaliser le contact entre le substrat à traiter et le réactif - donc pas besoin de mettre en oeuvre un rinçage pour éliminer le réactif en excès.

Par ailleurs, le flux gazeux qui est employé dans la réaction permet d'éliminer à la fois le HCl libéré (ce qui permet d'éviter d'avoir à le piéger) et les réactifs en excès.

De plus, il a été démontré dans les publications précitées que l'on obtenait un effet barrière satisfaisant avec un faible taux de greffage, ce qui permet d'employer de faibles quantités de réactifs.

Toutefois, pour que ce traitement soit compatible avec une application industrielle, il est nécessaire de résoudre un certain nombre de problèmes.

En premier lieu, il est nécessaire de déposer une quantité maîtrisée de réactif à la surface du substrat à traiter.

La quantité nécessaire dépend de la nature du substrat, mais varie dans une gamme 0,01 à 10 g/$m^2$ et de manière plus précise dans une gamme de 0.1 à 2 g/$m^2$.

Comme la réaction n'utilise pas de solvant, il faut réaliser cette dépose en produit pur.

En second lieu, il est nécessaire de réduire autant que possible le temps de réaction.

En effet, une vitesse de réaction correspondant à un temps de réaction d'une seconde conduit, avec une vitesse de défilement de 600 mètres/minute, à un réacteur de développement de 10 mètres.

Il est donc nécessaire de définir des paramètres de réaction qui permettent d'augmenter la vitesse de réaction.

Un autre problème à résoudre pour une mise en oeuvre industrielle est que le dégagement d'acide chlorhydrique pendant la réaction est néfaste à la cinétique et, du fait du caractère corrosif de ce gaz, est également susceptible d'endommager le substrat.

Il est donc nécessaire de pouvoir éliminer correctement le HCl libéré.

Un autre problème est d'éliminer, après le greffage, le réactif résiduel qui n'a pas réagi avec le substrat.

En effet, si du réactif reste au contact du substrat une fois celui-ci bobiné, il continue à se produire une réaction

de greffage qui libère du HCl lequel, étant piégé entre deux épaisseurs de substrat, risque d'endommager celui-ci.

Un but de la présente invention est donc de concevoir une machine qui permette la mise en oeuvre du greffage par chromatogénie à une échelle industrielle.

Un autre but de l'invention est d'optimiser le procédé de traitement pour qu'il soit viable sur le plan économique et industriel.

## BREVE DESCRIPTION DE L'INVENTION

Conformément à l'invention, il est proposé une machine pour le traitement par greffage chromatogénique d'un substrat en défilement présentant une face hydroxylée, comprenant :

- un dévidoir pour dérouler le substrat,
- un dispositif d'application d'un réactif de greffage sur la face hydroxylée du substrat, ledit réactif étant un chlorure d'acide gras,
- un rouleau chauffant pour le développement de la réaction de greffage sur la face hydroxylée du substrat, ledit rouleau étant pourvu d'un système d'embarrage pour appliquer une face du substrat contre ledit rouleau chauffant,
- un dispositif d'extraction de l'acide chlorhydrique produit au cours de la réaction de greffage,
- un dispositif d'application d'une lame d'air sur la face traitée du substrat pour éliminer le réactif de greffage résiduel,
- un dispositif de rembobinage du substrat traité.

Selon une première forme d'exécution de ladite machine, le système d'embarrage est agencé de sorte à appliquer la face hydroxylée du substrat contre ledit rouleau chauffant.

Selon un mode de réalisation particulièrement avantageux de ladite machine, elle comprend au moins deux rouleaux chauffants successifs et des systèmes d'embarrage respectifs pour appliquer la face hydroxylée du substrat contre lesdits rouleaux chauffants pour le développement de la réaction de greffage.

Selon un mode de réalisation particulier de l'invention, notamment dans le cas où le substrat n'est pas poreux, la surface du rouleau chauffant est pourvue d'une rugosité pour procurer un entrefer entre le rouleau et le substrat.

Le dispositif d'application de la lame d'air est préférentiellement une buse inclinée avec un angle supérieur à 30° par rapport à la surface du substrat et orientée à contre-courant du sens de défilement du substrat.

Selon une seconde forme d'exécution, ladite machine comprend un dispositif de carénage comprenant ledit rouleau chauffant, le système d'embarrage étant alors agencé de sorte à appliquer la face du substrat opposée à la face hydroxylée contre ledit rouleau chauffant.

Le dispositif d'application de la lame d'air est alors avantageusement agencé à la sortie du dispositif de carénage de sorte à ce que la lame d'air balaie la face hydroxylée du substrat à contre-courant du sens de défilement du substrat lorsque le substrat est contre le rouleau chauffant.

Par ailleurs, le dispositif d'extraction est de préférence agencé à l'entrée du dispositif de carénage de sorte à aspirer les produits transportés par ladite lame d'air.

Le dispositif d'application du réactif de greffage est de préférence un dispositif de flexographie ou d'héliographie, ou un dispositif de dépôt par cylindre gravé ou rugueux.

Un autre objet de l'invention concerne un procédé de traitement par greffage chromatogénique d'un substrat en défilement présentant une face hydroxylée, comprenant les étapes suivantes :

(a) application, sur la face hydroxylée du substrat, d'un réactif de greffage, ledit réactif étant un chlorure d'acide gras,
(b) développement de la réaction de greffage, une face du substrat étant appliquée contre un rouleau chauffant
(c) extraction de l'acide chlorhydrique émis lors de la réaction de greffage lorsque le substrat quitte le contact du rouleau chauffant,
(d) application d'une lame d'air chaud sur la face traitée du substrat de manière à évacuer le réactif de greffage résiduel,

et en ce que l'on choisit le diamètre, la température et la vitesse de rotation du rouleau chauffant de sorte que la durée de contact du substrat avec le rouleau chauffant soit sensiblement égale à la durée de la réaction de greffage.

Selon une première forme d'exécution dudit procédé, notamment lorsque le substrat présente une porosité élevée ou un faible taux d'humidité, on applique, pour le développement de la réaction de greffage, la face hydroxylée du substrat contre le rouleau chauffant avec un entrefer adapté pour confiner le réactif de greffage entre le rouleau et le substrat et pour permettre la dissipation de l'acide chlorhydrique émis lors de la réaction de greffage.

De préférence, on extrait l'acide chlorhydrique lorsque le substrat quitte le contact du rouleau chauffant.

De manière particulièrement avantageuse, l'étape (b) de développement de la réaction est mise en oeuvre par l'application de la face hydroxylée du substrat contre au moins deux rouleaux successifs et l'étape d'extraction de l'acide

chlorhydrique est mise en oeuvre lorsque le substrat quitte le contact de chacun desdits rouleaux.

La porosité et/ou la rugosité du substrat et/ou la rugosité de la surface du rouleau chauffant sont avantageusement choisies de sorte à procurer entre le substrat et le rouleau chauffant un entrefer adapté pour contenir l'acide chlorhydrique émis par la réaction chromatogénique.

Ainsi, ledit entrefer est en moyenne compris entre 0 et 100 μm, un entrefer nul correspondant typiquement au cas d'un substrat poreux (le substrat absorbant alors la totalité de l'acide chlorhydrique dégagé), tandis qu'un entrefer plus important est choisi lorsque le substrat n'est pas poreux (le volume nécessaire au dégagement de l'acide chlorhydrique étant alors procuré par la rugosité du rouleau chauffant).

Selon une seconde forme d'exécution du procédé, notamment lorsque le substrat est épais, peu poreux, ou présentant un fort taux d'humidité, on applique, pour le développement de la réaction de greffage, la face opposée à la face hydroxylée du substrat contre le rouleau chauffant.

De manière particulièrement avantageuse, on applique, simultanément à la réaction de greffage, la lame d'air chaud de sorte à balayer la face traitée du substrat à contre-courant du sens de défilement du substrat.

De préférence, on extrait l'acide chlorhydrique et le réactif de greffage résiduel en amont du rouleau chauffant par rapport au sens de défilement du substrat.

La température de la lame d'air chaud est généralement supérieure à la température de la face hydroxylée du substrat pendant la réaction de greffage.

L'étape (a) d'application du réactif sur la face hydroxylée du substrat est mise en oeuvre de préférence par flexographie ou par héliographie.

Selon une application préférée de l'invention, le substrat est un matériau cellulosique dont une face est enduite d'un film d'alcool polyvinylique, et le réactif de greffage comprend du chlorure d'acide stéarique ou du chlorure d'acide palmitique.

Il est éventuellement possible de combiner les deux formes d'exécution du procédé, en employant au moins deux rouleaux chauffants et en appliquant, contre au moins un rouleau chauffant, la face hydroxylée du substrat et en appliquant, contre au moins un autre rouleau chauffant, la face opposée à la face hydroxylée du substrat contre ledit rouleau chauffant.

## BREVE DESCRIPTION DES DESSINS

D'autres caractéristiques et avantages de l'invention ressortiront de la description détaillée qui va suivre, en référence aux dessins annexés sur lesquels :

- la figure 1 est une vue schématique de la structure d'un mode de réalisation d'une machine conforme à l'invention,
- la figure 2 est une vue schématique d'une variante de ladite machine
- la figure 3 est une vue schématique d'un autre mode de réalisation d'une machine conforme à l'invention.

Il est à noter que, pour faciliter l'illustration, les différents dispositifs schématisés sur ces figures ne sont pas représentatifs de l'échelle réelle de la machine.

## DESCRIPTION DETAILLEE DE L'INVENTION

Le procédé de greffage s'applique de manière générale à un substrat S hydroxylé se présentant sous la forme d'une bobine d'une laize déterminée selon l'application envisagée.

Le substrat S est typiquement un substrat poreux dont une face présente des fonctions hydrophiles (comme décrit dans le document WO 99/08784), qui sont soit portées par le substrat lui-même soit par une enduction d'une couche présentant des fonctions hydrophiles.

Selon un mode particulier de réalisation de l'invention, le substrat S présente une face enduite d'un film d'alcool polyvinylique (PVA), comme décrit dans le document WO 2009/083525.

On se reportera donc notamment à ces documents pour plus de détails concernant la préparation du substrat hydroxylé, qui n'est pas l'objet de la présente invention.

Selon une application préférée de l'invention, le substrat S est un matériau cellulosique, tel que du papier ou du carton.

<u>Rappels sur la réaction chromatogénique</u>

Le réactif de greffage est caractérisé par une température d'ébullition $T_{eb}$.

La diffusion du réactif de greffage dans un substrat poreux est effectuée sous l'action d'un flux gazeux de débit D et de température $T_0$ inférieure à $T_{eb}$.

L'équation de Clausius-Clapeyron permet de calculer le volume de gaz Vr nécessaire pour éluer complètement le réactif hors du substrat poreux :

$$Ln\,Vr = d + c^{T_{eb}}/_{T_0} \quad \text{(c et d étant des constantes)}$$

Ce volume de gaz est lié au temps de réaction Tr par la relation Vr = D.Tr, d'où :

$$Ln\,Tr = d + c^{T_{eb}}/_{T_0} - \log D$$

En considérant que les réactions sont d'ordre 1, l'équation de cinétique différentielle C de l'équation s'écrit :

$$C = K1\{SOH\}\cdot\{ROCl\} - K2\{SOR\}\{HCl\}$$

Si l'acide chlorhydrique est éliminé en continu, le deuxième terme de l'équation est nul et la cinétique C ne dépend que du premier terme.

On sait par ailleurs par la loi d'Arrhénius que la constante de vitesse C est une fonction exponentielle de la température, qui s'écrit :

$$K1 = A e^{-Ea/RT_0}$$

où Ea est l'énergie d'activation de la réaction et R la constante des gaz parfaits. Ln C peut donc s'écrire :

$$Ln\,C = Log\{SOH\}\cdot\{ROCl\} + Log\,A - Ea/RT_0$$

Il est ainsi possible de définir une valeur de cinétique moyenne Cm qui s'écrit :

$$Ln\,Cm = f - Ea/RT_0$$

Le rendement R de la réaction peut alors s'écrire comme le rapport entre le degré d'avancement de la réaction (qui est le produit de la vitesse par le temps) et la quantité initiale $Q_0$ de réactif déposé :

$$R = Cm \cdot Tr/Q_0$$

soit :

$$Ln\,R = Ln\,Cm + Ln\,Tr - Ln\,Q_0$$

En remplaçant Cm et Tr par leurs expressions définies ci-dessus, il vient :

$$Ln\,R = f - Ea/RT_0 + d + c\,T_{eb}/T_0 - Ln\,Q_0 - Ln\,D$$

que l'on peut écrire :

$$LnR = a - Ea/RT_0 + cT_{eb}/T_0 - LnD$$

où a=f+d-Ln $Q_0$

Le rendement s'écrit donc :

$$R = \frac{e^{a - Ea/RT_0 + cT_{eb}/T_0}}{D}$$

Cette formule met donc en évidence l'influence sur ce rendement de la température d'ébullition $T_{eb}$ du réactif, de la température $T_0$ de la réaction, et du débit D du gaz.

Cette influence a également été mise en évidence expérimentalement, comme le relatent les articles de E. de Paola, J-S. Condoret et D. Samain, Industrial Development of BioGuard, a New Paper Internal Sizing and Waterproofing Process, Specialty and Technical Paper Proceedings, Berlin, 20-21 June 2000 et de S. Berlioz, C. Stinga, J. Condoret et D. Samain, Investigation of a Novel Principle of Chemical Grafting for Modification of Cellulose Fibers, International Journal of Chemical Reactor Engineering, Vol. 6, 2008.

Il existe donc pour chaque réactif un optimum de la température de réaction, au-delà duquel on observe une décroissance significative du rendement.

Cette baisse du rendement n'est pas due à une baisse de la réactivité mais au fait qu'une partie du réactif est perdue par diffusion.

Lorsque la température augmente, l'influence de cette perte de réactif devient supérieure à l'augmentation de la vitesse réactionnelle induite par la température.

Le débit a également une influence importante sur la diffusion du réactif.

On voit donc qu'une simple augmentation de la température de réaction ne permet pas d'atteindre le but recherché de réduire le temps de réaction, puisqu'elle conduit à une perte de réactif par diffusion.

La machine qui a été développée selon l'invention, et le procédé associé, permettent de limiter la diffusion du réactif tout en atteignant le plus rapidement possible la température de réaction.

Cette machine et ce procédé sont décrits successivement ci-après.

## Machine de traitement

On décrit dans un premier temps, en référence à la figure 1, une première forme d'exécution de la machine, de l'amont vers l'aval du procédé.

La machine comprend, dans sa partie amont, un dévidoir 1 adapté pour recevoir une bobine de substrat S dont une face Fh est hydroxylée.

Un dispositif 3 de dépôt du réactif de greffage est situé en aval du dévidoir 1.

Il s'agit avantageusement d'un dispositif de flexographie ou d'héliographie, connu de l'homme du métier, qui permet de déposer le réactif de greffage à l'état liquide sur la face hydroxylée Fh du substrat, à la manière d'une encre.

Il est possible de contrôler précisément la densité et la quantité du réactif de greffage déposé, au moyen d'une gravure particulière du rouleau anilox qui est employé pour appliquer le réactif.

De manière optionnelle, un élément 2 de chauffage du substrat est présent entre le dévidoir 1 et le dispositif 3.

Cet élément de chauffage 2 peut comprendre un moyen de chauffage par infrarouge, par exemple.

Il peut être utile pour sécher le substrat avant la réaction, et/ou pour porter la température du substrat à une température similaire à celle du réactif de greffage.

Eventuellement, un élément de chauffage peut également être disposé en aval du dispositif 3 d'application du réactif pour éviter que le substrat et le réactif ne refroidissent avant que le début du développement de la réaction.

La machine comprend également un rouleau chauffant 4 dont le diamètre, la température, et la vitesse de rotation sont choisis de telle sorte que la durée de contact du substrat contre le rouleau corresponde sensiblement à la durée de la réaction.

Un système d'embarrage 5a, 5b associé au rouleau permet de contraindre la face hydroxylée du substrat à se plaquer contre le rouleau, sur la plus grande longueur possible. En effet, comme on le verra plus bas, c'est au contact du rouleau chauffant que se développe la réaction de greffage.

Juste en aval du rouleau chauffant 4, c'est-à-dire à l'endroit où le substrat S quitte le contact du rouleau 4, un dispositif d'extraction de gaz 6 est agencé.

Ce dispositif 6 est par exemple une hotte aspirante, qui permet d'éliminer le HCl émis lors de la réaction de

greffage à proximité du substrat (le HCl étant néfaste à la cinétique de réaction et susceptible d'endommager le substrat) tout en évitant qu'il ne se disperse dans l'environnement de la machine.

En aval du rouleau chauffant 4, la machine comprend un dispositif 7 d'application d'une lame d'air pour éliminer le réactif de greffage résiduel.

Ce dispositif 7 comprend typiquement une buse orientée vers la face traitée du substrat, avec une inclinaison appropriée pour diffuser une lame d'air chaud qui balaie le substrat et disperse le réactif résiduel.

La buse présente une largeur sensiblement égale à la laize du substrat, de manière à procurer un balayage sur toute la largeur de celui-ci.

Par exemple, la buse est inclinée avec un angle d'environ 45° par rapport à la face du substrat.

De préférence, la direction de la lame d'air est à l'opposé de la direction de défilement du substrat, pour optimiser la dispersion du réactif.

Dans la région d'application de la lame d'air chaud, on fait en sorte que le substrat repose sur un support rigide, de manière à ne pas se déformer sous l'action de la lame d'air.

Ledit support rigide peut être par exemple une surface plane (non illustrée ici) contre laquelle défile la face opposée à la face hydroxylée du substrat.

La machine comprend éventuellement un dispositif de refroidissement du substrat, afin de ramener celui-ci jusqu'à une température inférieure à 55°C environ en vue de son bobinage.

Enfin, la machine comprend, dans sa partie aval, un dispositif 8 de rembobinage du substrat traité.

De tels dispositifs sont à la portée de l'homme du métier et ne seront donc pas décrits plus avant.

Par ailleurs, la machine comprend des moyens (non représentés) pour mettre en tension le substrat entre le dévidoir et le dispositif de rembobinage, de manière à assurer la mise en contact de la face hydroxylée du substrat avec le rouleau chauffant, comme cela va être décrit plus bas.

La figure 2 illustre une variante de la machine, dans laquelle le réacteur de développement de la réaction de greffage ne comprend pas un unique rouleau chauffant, mais deux rouleaux chauffants successifs 4' et 4".

A chaque rouleau chauffant 4', 4" est associé un système d'embarrage respectif 5a', 5b' et 5a", 5b" pour contraindre le substrat à se plaquer contre chacun des rouleaux.

Les rouleaux chauffants 4', 4" peuvent être identiques mais il pourra être avantageux de leur conférer un diamètre et une température différents, afin de piloter plus finement la réaction.

Naturellement, la machine pourra aussi comprendre plus de deux rouleaux chauffants, l'homme du métier étant à même, comme on le verra plus bas, de définir les paramètres desdits rouleaux chauffants pour optimiser la réaction de greffage.

Comme on peut le voir à la figure 2, à la sortie de chaque volume de réaction, c'est-à-dire à l'endroit où le substrat quitte le contact du rouleau chauffant 4', 4", est disposé un dispositif d'aspiration 6', 6" similaire au dispositif 6 décrit plus haut.

Le reste de la machine est identique à la machine de la figure 1.

La figure 3 illustre une autre forme d'exécution de la machine.

Dans ce mode de réalisation comme dans celui décrit ci-dessus, la machine comprend un rouleau chauffant 4 auquel est associé un système d'embarrage 5a, 5b pour contraindre le substrat à se plaquer contre le rouleau 4.

Le réacteur de développement de la réaction chromatogénique est un dispositif de carénage 40 comprenant le rouleau 4, de telle sorte que le substrat passe entre le rouleau chauffant 4 et une surface cylindrique concave 41 dont l'axe de symétrie est confondu avec l'axe du rouleau 4.

L'entrefer entre le rouleau 4 et la surface concave 41 peut être compris entre 100 $\mu$m et 20 cm.

A la différence du mode de réalisation précédent, c'est la face opposée à la face hydroxylée Fh qui est au contact du rouleau chauffant 4.

Le rouleau chauffant 4 présente un diamètre, une température et une vitesse de rotation choisis de telle sorte que la durée de contact du substrat contre le rouleau corresponde sensiblement à la durée de la réaction.

Le dispositif 7 d'application d'une lame d'air est, dans ce mode de réalisation, agencé de sorte à diffuser une lame d'air chaud qui balaie la face traitée Fh du substrat pendant que la face opposée est au contact du rouleau chauffant 4.

Ce dispositif 7 comprend typiquement une buse orientée vers l'intérieur du dispositif de carénage 40, c'est-à-dire entre le rouleau 4 et la surface concave 41, dans la direction opposée à la direction de défilement.

La buse présente de préférence une largeur sensiblement égale à la laize du substrat, de manière à procurer un balayage sur toute la largeur de celui-ci.

La machine comprend en outre un dispositif d'aspiration 6 pour aspirer l'acide chlorhydrique et l'eau formés pendant la réaction.

De manière particulièrement avantageuse, ledit dispositif d'aspiration 6 est disposé en amont du dispositif de carénage 40 et orienté vers l'intérieur de celui-ci, de sorte à recueillir les résidus de réactif ainsi que l'eau et l'acide chlorhydrique portés entraînés par la lame d'air chaud.

Le reste de la machine est identique à la machine de la figure 1.

Par ailleurs, il est possible, comme à la figure 2, de placer successivement plusieurs rouleaux chauffants pour optimiser la réaction de greffage.
On peut bien sûr alterner des rouleaux où la face hydroxylée est au contact avec le rouleau et des rouleaux où la face hydroxylée est opposée au rouleau.

Procédé de greffage chromatogénique

On décrit maintenant le procédé de greffage chromatogénique, toujours en référence aux figures 1 et 2.
Le sens de défilement du substrat S est schématisé par une double flèche sur les figures 1 et 2.
Le substrat S, dont une face Fh est hydroxylée, est présenté sous la forme d'une bobine qui est mise en place sur le dévidoir 1.
On fait défiler une longueur suffisante du substrat jusqu'au dispositif de rembobinage 8 et l'on met en tension le substrat S entre ces deux dispositifs.
Sur l'exemple illustré à la figure 1, la face hydroxylée Fh est orientée vers le bas, mais il va de soi que l'on pourrait tout à fait mettre en oeuvre le procédé avec la face hydroxylée Fh orientée vers le haut, en adaptant en conséquence l'agencement des composants de la machine qui vont être décrits par la suite.
De manière optionnelle, on chauffe légèrement le substrat S en amont du dépôt du réactif de greffage pour le sécher et/ou le porter sensiblement à la même température que le réactif.
Ce chauffage préliminaire est effectué par l'élément de chauffage 2 évoqué plus haut.
Le dépôt du réactif de greffage est effectué, sur la face hydroxylée Fh du substrat, par le dispositif 3.
Le réactif de greffage est utilisé pur, sous forme liquide ; il est donc porté, dans le dispositif 3, à une température supérieure à sa température de fusion afin de présenter une viscosité compatible avec le système de dépôt (une température supérieure de 20 à 30°C par rapport à la température de fusion du réactif est considérée comme appropriée).
Selon un mode préféré de mise en oeuvre de l'invention, le réactif de greffage est un chlorure d'acide gras tel que décrit dans le document WO 99/08784 cité plus haut.
De manière particulièrement avantageuse, et notamment dans le cas où le substrat est recouvert d'un film de PVA, le réactif de greffage est du chlorure d'acide stéarique ou du chlorure d'acide palmitique.
Le dépôt du réactif ne se fait pas de manière homogène (qui correspondrait à un à-plat où le réactif couvrirait uniformément toute la surface du substrat), mais de manière hétérogène, c'est-à-dire sous forme d'une pluralité de taches discrètes régulièrement réparties sur la surface du substrat.
Il a en effet été démontré dans l'article de S. Berlioz, C. Stinga, J. Condoret et D. Samain, Investigation of a Novel Principle of Chemical Grafting for Modification of Cellulose Fibers, International Journal of Chemical Reactor Engineering, Vol. 6, 2008, que lors du développement de la réaction, il se produit une diffusion du réactif dans le plan du substrat, conduisant ainsi à l'obtention d'une surface uniformément hydrophobe autour de chaque tache déposée.
Le développement de la réaction est mis en oeuvre en appliquant la face hydroxylée Fh du substrat contre le rouleau chauffant 4, tout en maintenant un mince entrefer e entre la surface du rouleau et celle du substrat.
Il faut comprendre que sur les figures 1 et 2, cet entrefer e a été exagéré pour en permettre la représentation.
En réalité, l'entrefer e est dimensionné de sorte à permettre, d'une part, un confinement du réactif au voisinage du substrat (de manière à limiter les pertes de réactif) et, d'autre part, un volume permettant au produit par la réaction de se dissiper).
Le calcul de l'entrefer nécessaire peut être effectué selon le raisonnement suivant, basé sur l'hypothèse d'un greffage avec une quantité de 0,5 g/$m^2$ de chlorure d'acide stéarique.
Le nombre de moles de HCl libérées est au maximum de 0,5 / 302,4 soit $1{,}66.10^{-3}$ mole (le poids moléculaire de l'acide stéarique étant de 302,4 g/mol).
Le volume correspondant est de $1{,}66.10^{-3}$ x 22,4 l soit 37 ml.
A pression atmosphérique, pour 1 $m^2$, ce volume correspond à une épaisseur de 37 $\mu$m, c'est-à-dire une épaisseur environ deux fois plus faible que l'épaisseur d'une feuille de papier ordinaire.
L'homme du métier sera à même de calculer l'entrefer adéquat pour d'autres conditions de réaction.
De manière particulièrement avantageuse, cet entrefer e est donc tellement faible qu'il est assuré par les défauts naturels de planéité du rouleau chauffant 4 et/ou par la rugosité et la porosité du substrat lorsque celui-ci est poreux.
Eventuellement, il est possible de procurer au rouleau chauffant 4 une rugosité plus accentuée pour augmenter l'entrefer.
En particulier, lorsque le substrat n'est pas poreux ou présente une surface très fermée, c'est le rouleau chauffant qui doit présenter une rugosité adaptée pour procurer l'entrefer nécessaire.
L'homme du métier pourra donc être amené à utiliser des rouleaux présentant des rugosités différentes selon les applications.
Par exemple, des rouleaux anilox sont disponibles commercialement avec des volumes de rugosité de surface

de l'ordre de grandeur mentionné ci-dessus.

Il est à noter que l'entrefer ne doit pas nécessairement être constant ; il peut y avoir des zones du rouleau en contact avec le substrat pour autant que dans d'autres zones il y ait une distance suffisante entre le substrat et le rouleau pour procurer un volume suffisant pour dissiper le HCl. La valeur d'entrefer indiquée ci-dessus est donc une valeur moyenne.

Ainsi, le volume compris entre la surface du rouleau chauffant et le substrat, c'est-à-dire le volume défini par l'entrefer e et la distance $\ell$ de contact entre le substrat S et le rouleau chauffant 4, constitue la chambre de réaction chromatogénique.

Le fait que la réaction chromatogénique nécessite un taux de greffage faible permet d'employer une faible quantité de réactif de greffage et, par conséquent, ne nécessite qu'un faible volume pour la dissipation de l'acide chlorhydrique.

On comprend donc qu'en choisissant le diamètre, la température et la vitesse de rotation du rouleau chauffant 4 de manière appropriée, on peut faire en sorte que lorsque le substrat quitte le contact du rouleau chauffant, l'avancement souhaité de la réaction de greffage soit atteint.

En d'autres termes, on fait en sorte que la durée de contact du substrat S avec le rouleau chauffant 4 soit sensiblement égale à la durée de la réaction de greffage.

Par « durée sensiblement égale », on entend dans le présent texte la durée au terme de laquelle 90% ou plus de la réaction de greffage est réalisée.

Egalement, le développement de la réaction est mis en oeuvre avec un débit de gaz minimal.

Par ailleurs, le fait que la face hydroxylée Fh imprégnée du réactif soit au contact du rouleau permet d'optimiser l'apport thermique, puisque seule la face sur laquelle se produit la réaction est chauffée.

A contrario, un chauffage par infrarouge tel qu'envisagé dans l'article d'E. de Paola et al. précédemment cité pénétrerait dans l'épaisseur du substrat, ce qui conduirait à une consommation énergétique beaucoup plus importante et, dans le cas d'un système infrarouge gaz, à la production de vapeur d'eau à proximité de la réaction, ce qui pénaliserait grandement le rendement.

Par ailleurs, on peut, grâce au rouleau chauffant 4, réaliser la réaction à une température supérieure à la température optimale déterminée dans le procédé de l'art antérieur.

Selon la loi d'Arrhénius, une élévation de température de 30°C conduit en général à une augmentation de la vitesse de réaction d'un facteur 10, ce qui correspond à l'accélération recherchée.

Ainsi, par exemple, alors que la température optimale pour le greffage d'acide stéarique est de 150°C dans les conditions de l'art antérieur, le développement de la réaction peut être mis en oeuvre, selon l'invention, avec un rouleau chauffant de 1,5 m de diamètre, porté à une température de 170°C, avec une vitesse de défilement de 400 m/min et en procurant un taux de greffage de 0,5 g/$m^2$.

A cet égard, on aurait pu craindre que, dans le cas où le substrat est enduit d'un film de PVA, ce dernier - qui est un polymère thermoplastique - ne fonde au contact du rouleau chauffant.

Il a toutefois été constaté qu'il n'en était rien.

Une première cause semble être le fait que le réactif déposé sur le substrat forme une mince barrière qui évite l'adhérence du PVA contre le rouleau chauffant 4 au début de la réaction de greffage.

Une deuxième cause est que, lorsque le PVA est greffé, il perd son caractère adhésif et n'est donc plus susceptible d'adhérer au rouleau.

Si besoin est, il est possible d'utiliser la variante de la machine illustrée à la figure 2 en chauffant le premier rouleau 4' à une température plus basse inférieure à la température de fusion pour éviter encore plus les phénomènes parasites d'adhérence.

Lorsque le substrat S quitte le contact avec le rouleau 4, on aspire le HCl par le dispositif d'aspiration 6 dans le but, d'une part, de favoriser la cinétique de réaction et, d'autre part, de minimiser l'endommagement du substrat par ce gaz corrosif.

Cependant, même si le HCl reste entre le substrat et le rouleau pendant la réaction, pour n'être évacué qu'à la sortie du rouleau, le temps de réaction obtenu grâce à l'invention est suffisamment court pour que le HCl n'ait pas le temps d'endommager notablement le substrat.

Dans le cas de la figure 2, les deux rouleaux chauffants 4' et 4" peuvent présenter des diamètres différents et être chauffés à des températures différentes, ce qui permet de contrôler la réaction de manière plus fine.

Ainsi, par exemple, lorsque, pour une application donnée, une quantité plus importante de réactif est nécessaire, l'emploi de deux rouleaux (ou davantage) permet de développer la réaction dans un temps suffisamment bref.

En particulier, on peut ainsi éliminer le HCl libéré par la réaction à la sortie de chaque rouleau chauffant par un dispositif d'aspiration 6', 6" respectif, ce qui permet d'une part, de minimiser encore davantage les éventuelles dégradations du substrat par le HCl et d'autre part, d'accélérer encore la réaction en diminuant le deuxième terme de l'équation de vitesse.

Cette variante est particulièrement avantageuse dans le cas de substrats fragiles avec de fortes quantités de

réactifs et lorsque des vitesses de défilement très importantes sont requises.

Ensuite, avant le rembobinage du substrat traité, on balaie au moyen d'une lame d'air la face traitée du substrat.

En effet, l'application d'une lame d'air chaud a pour effet de disperser le réactif non consommé.

Il s'agit donc d'un nettoyage physique et non chimique du substrat.

Cette étape d'élimination du réactif en excès présente deux avantages.

Le premier est de rembobiner le substrat dépourvu de réactif ; en effet, la présence résiduelle de réactif sur le substrat bobiné conduirait, à long terme, à la libération de HCl qui, ne pouvant s'échapper, pourrait dégrader le substrat.

Le second avantage est de contribuer à l'accélération de la réaction en évitant d'avoir à attendre la consommation totale des réactifs.

L'équation de vitesse montre en effet que la vitesse est fonction du produit des concentrations, ce qui signifie que plus ces dernières sont faibles, plus la réaction est lente.

En d'autres termes, lorsque l'on s'approche de la fin de la réaction, la vitesse diminue de manière proportionnelle à la quantité de réactif encore présent.

Cette baisse de la vitesse serait donc préjudiciable à l'obtention d'un temps réactionnel très court alors même que les quantités en jeu à ce stade sont très faibles et n'ont que peu d'influence sur le résultat final du traitement.

On a en effet vérifié que les résultats en termes de fonction barrière ne sont que très peu affectés par une réduction de 5% à 10% de la quantité de réactif, par exemple.

Par conséquent, le fait d'éliminer les 5% à 10% résiduels de réactif ne modifie pas substantiellement les propriétés fonctionnelles du substrat traité.

On notera que l'élimination du réactif en excès par une lame d'air chaud à contre-courant du sens de défilement du substrat correspond aux conditions inverses de celles mises en oeuvre pour augmenter la cinétique réactionnelle.

En effet, pour éliminer le réactif, il est nécessaire d'augmenter fortement les phénomènes de diffusion, au lieu de les restreindre.

Une température plus importante (supérieure à la température optimale de la réaction chromatogénique), et surtout un débit gazeux plus élevé, permettent d'obtenir le résultat attendu.

Par « lame d'air chaud » on entend donc dans le présent texte une lame d'air dont la température est supérieure à la température du substrat, et de préférence sensiblement supérieure à ladite température.

Ainsi, par exemple, une lame d'air à 200°C s'écoulant avec une vitesse linéaire de 30 m/s permet d'effectuer le nettoyage souhaité.

Enfin, de manière classique, on enroule le substrat traité sous forme d'une bobine en vue de son stockage, de son transport et/ou de son utilisation ultérieure.

Le procédé qui vient d'être décrit est particulièrement bien adapté au traitement d'un substrat présentant une porosité élevée et/ou un faible taux d'humidité.

Lorsque l'on traite un substrat épais, présentant une faible porosité, revêtu d'un revêtement occlusif et/ou présentant un taux d'humidité élevé, il peut être difficile, avec le procédé qui vient d'être décrit, d'éliminer toute l'eau formée lors de la réaction.

Il peut alors en résulter un taux de greffage insuffisant du réactif, et/ou une hydrolyse de celui-ci.

Une augmentation de l'entrefer et/ou une augmentation de la température du rouleau chauffant peuvent permettre, dans une certaine mesure, d'améliorer l'efficacité de la réaction et de mieux évacuer l'eau formée.

Cependant, ces solutions possèdent des limites.

Par exemple, une augmentation trop forte de l'entrefer conduirait à former une lame d'air thermiquement isolante entre le rouleau chauffant et la face traitée du substrat, ne permettant pas de chauffer le substrat à la température requise.

Pour traiter un substrat épais, de faible porosité et/ou présentant un revêtement occlusif, une autre forme d'exécution du procédé, utilisant la machine illustrée à la figure 3, est plus avantageuse.

Dans ce mode de réalisation, c'est la face opposée à la face hydroxylée Fh du substrat qui est au contact du rouleau chauffant 4.

La face hydroxylée Fh est quant à elle orientée vers la surface concave 41 du dispositif de carénage 40 et est balayée par la lame d'air chaud (schématisée par des flèches en pointillés) appliquée par le dispositif 7.

Cette lame d'air chaud, combinée au rouleau chauffant 4, a pour effet, d'une part, de procurer un chauffage du substrat sur ses deux faces.

Ainsi, même si le substrat est épais et que le rouleau chauffant ne peut à lui seul porter la face hydroxylée à la température souhaitée, la lame d'air chaud contribue à augmenter la température de la face hydroxylée à une température favorisant le greffage.

D'autre part, la lame d'air chaud remplit également la même fonction que dans le premier mode de réalisation, c'est-à-dire qu'elle entraîne les résidus de réactif mais aussi l'acide chlorhydrique et l'eau qui se sont formés pendant la réaction.

Ces produits sont aspirés par le disposition d'extraction qui, dans cette forme d'exécution, est agencé en amont du rouleau chauffant, diamétralement opposé au dispositif d'application de la lame d'air.

Par ailleurs, c'est le rouleau chauffant 4 qui procure une surface d'appui pour le substrat à l'encontre de la pression exercée par la lame d'air chaud.

Pour assurer que le réactif puisse se greffer avec un rendement satisfaisant sur le substrat avant d'être balayé par la lame d'air chaud, on dose la fraction d'acide gras ayant réagi avec les groupes hydroxyles de la surface traitée et l'on adapte la vitesse de défilement - et donc la durée de réaction - pour optimiser cette valeur.

Enfin, le bilan énergétique du procédé est amélioré puisque la lame d'air chaud n'est pas dissipée dans l'environnement après avoir balayé la surface du substrat mais est mise à profit pour chauffer le substrat, permettre le développement de la réaction chromatogénique et favoriser l'extraction de l'eau et de l'acide chlorhydrique.

<u>Exemple de dimensionnement de la machine et de paramétrage du procédé</u>

A titre purement indicatif, une machine telle que décrite ci-dessus en référence à la figure 1 peut être dimensionnée, et le procédé peut être paramétré, comme suit.

Le substrat à traiter se présente sous la forme d'une bobine de 1200 m de diamètre et de 240 mm de laize.

Le substrat est un matériau cellulosique présentant un grammage compris entre 30 et 400 g/$m^2$.

La vitesse de défilement est comprise entre 50 et 400 m/min.

Le réactif de greffage est un chlorure d'acide gras, déposé par flexographie sur la face hydroxylée du substrat, en étant maintenu à une température supérieure à sa température de fusion pendant son trajet vers le substrat.

Par exemple, dans le cas du chlorure d'acide stéarique, son point de fusion est de 25° et il doit donc être porté à au moins 40°C pour son application sur le substrat.

La quantité de réactif déposée est comprise entre 0,2 et 2 ml/$m^2$.

Avant et/ou après le dépôt du réactif, le substrat est optionnellement chauffé par infrarouge, en fonction de l'état du substrat à traiter, de la température du réactif de greffage et/ou de la distance à parcourir entre le dispositif d'application du réactif de greffage et le rouleau chauffant de développement.

Le rouleau chauffant destiné au développement de la réaction présente un diamètre de 1,5 m et est porté à une température de 180°C grâce à une structure à double enveloppe alimentée à l'huile chaude.

Le temps de réaction est alors typiquement inférieur à 1 seconde.

L'extraction du HCl à la sortie du rouleau se fait au moyen d'une hotte aspirante.

L'élimination du réactif de greffage résiduel est opérée par une lame d'air portée à 200°C, avec un débit correspondant à une vitesse linéaire de 30 m/s, produite par une buse s'étendant sur toute la laize et inclinée de 45° par rapport au substrat.

De préférence, le substrat est refroidi avant le bobinage du substrat.

Enfin, il va de soi que les exemples que l'on vient de donner ne sont que des illustrations particulières en aucun cas limitatives quant aux domaines d'application de l'invention.

## Revendications

1. Machine pour le traitement par greffage chromatogénique d'un substrat (S) en défilement présentant une face hydroxylée (Fh), **caractérisée en ce qu'**elle comprend :

   - un dévidoir (1) pour dérouler le substrat (S),
   - un dispositif (3) d'application d'un réactif de greffage sur la face hydroxylée (Fh) du substrat, ledit réactif étant un chlorure d'acide gras,
   - un rouleau chauffant (4) pour le développement de la réaction de greffage sur la face hydroxylée (Fh) du substrat, ledit rouleau (4) étant pourvu d'un système d'embarrage (5a, 5b) pour appliquer une face du substrat (S) contre ledit rouleau chauffant (4),
   - un dispositif (6) d'extraction de l'acide chlorhydrique produit au cours de la réaction de greffage,
   - un dispositif (7) d'application d'une lame d'air sur la face traitée du substrat pour éliminer le réactif de greffage résiduel,
   - un dispositif (8) de rembobinage du substrat (S) traité.

2. Machine selon la revendication 1, **caractérisée en ce que** le système d'embarrage (5a, 5b) est agencé de sorte à appliquer la face hydroxylée (Fh) du substrat (S) contre ledit rouleau chauffant (4).

3. Machine selon la revendication 2, **caractérisée en ce qu'**elle comprend au moins deux rouleaux chauffants (4', 4") successifs et des systèmes d'embarrage respectifs (5a', 5b', 5a", 5b") pour appliquer la face hydroxylée (Fh) du substrat contre lesdits rouleaux chauffants pour le développement de la réaction de greffage.

4. Machine selon l'une des revendications 2 à 3, **caractérisée en ce que** la surface du rouleau chauffant (4, 4', 4") est pourvue d'une rugosité pour procurer un entrefer (e) entre le rouleau et le substrat.

5. Machine selon l'une des revendications 2 à 4, **caractérisée en ce que** le dispositif (7) d'application de la lame d'air est une buse inclinée avec un angle supérieur à 30° par rapport à la surface du substrat (S) et orientée à contre-courant du sens de défilement du substrat.

6. Machine selon la revendication 1, **caractérisée en ce qu'**elle comprend un dispositif de carénage (40) comprenant ledit rouleau chauffant (4) et **en ce que** le système d'embarrage (5a, 5b) est agencé de sorte à appliquer la face du substrat (S) opposée à la face hydroxylée (Fh) contre ledit rouleau chauffant (4).

7. Machine selon la revendication 6, **caractérisée en ce que** le dispositif (7) d'application de la lame d'air est agencé à la sortie du dispositif de carénage (40) de sorte à ce que la lame d'air balaie la face hydroxylée (Fh) du substrat à contre-courant du sens de défilement du substrat lorsque le substrat est contre le rouleau chauffant (4).

8. Machine selon la revendication 7, **caractérisé en ce que** le dispositif (6) d'extraction est agencé à l'entrée du dispositif de carénage (40) de sorte à aspirer les produits transportés par la lame d'air.

9. Procédé de traitement par greffage chromatogénique d'un substrat (S) en défilement présentant une face (Fh) hydroxylée, **caractérisé en ce qu'**il comprend les étapes suivantes :

   (a) application, sur la face hydroxylée (Fh) du substrat (S), d'un réactif de greffage, ledit réactif étant un chlorure d'acide gras,
   (b) développement de la réaction de greffage, une face du substrat (S) étant appliquée contre un rouleau chauffant (4),
   (c) extraction de l'acide chlorhydrique émis lors de la réaction de greffage,
   (d) application d'une lame d'air chaud sur la face traitée du substrat de manière à évacuer le réactif de greffage résiduel,
   et **en ce que** l'on choisit le diamètre, la température et la vitesse de rotation du rouleau chauffant (4) de sorte que la durée de contact du substrat (S) avec le rouleau chauffant (4) soit sensiblement égale à la durée de la réaction de greffage.

10. Procédé selon la revendication 9, **caractérisé en ce que** pour le développement de la réaction de greffage, on applique la face hydroxylée (Fh) du substrat contre ledit rouleau chauffant (4) avec un entrefer (e) adapté pour confiner le réactif de greffage entre le rouleau et le substrat et pour permettre la dissipation de l'acide chlorhydrique émis lors de la réaction de greffage.

11. Procédé selon la revendication 10, **caractérisé en ce que** l'on extrait l'acide chlorhydrique lorsque le substrat quitte le contact du rouleau chauffant.

12. Procédé selon la revendication 10, **caractérisé en ce que** l'étape (b) de développement de la réaction est mise en oeuvre par l'application de la face hydroxylée (Fh) du substrat (S) contre au moins deux rouleaux (4', 4") successifs et **en ce que** l'étape (c) d'extraction de l'acide chlorhydrique est mise en oeuvre lorsque le substrat quitte le contact de chacun desdits rouleaux (4', 4").

13. Procédé selon la revendication 9, **caractérisé en ce que** pour le développement de la réaction de greffage, on applique la face opposée à la face hydroxylée du substrat contre le rouleau chauffant.

14. Procédé selon la revendication 13, **caractérisé en ce que** l'on applique simultanément la lame d'air chaud de sorte à balayer la face traitée du substrat à contre-courant du sens de défilement du substrat.

15. Procédé selon l'une des revendications 9 à 14, **caractérisé en ce que** la température de la lame d'air chaud est supérieure à la température de la face hydroxylée du substrat pendant la réaction de greffage.

**Patentansprüche**

1. Maschine zur Behandlung eines durchlaufenden, eine hydroxylierte Seite (Fh) aufweisenden Substrats (S) durch

chromatogene Pfropfung, **dadurch gekennzeichnet, dass** es umfasst:

- eine Abhaspel (1) zum Abwickeln des Substrats (S);
- eine Vorrichtung (3) zum Auftragen eines Pfropfungsreagens auf die hydroxylierte Seite (Fh) des Substrats, wobei das Reagens ein Fettsäurechlorid ist,
- eine beheizte Walze (4) zum Fördern der Pfropfungsreaktion auf der hydroxylierten Seite (Fh) des Substrats, wobei die Walze (4) mit einem Einspannsystem (5a, 5b) versehen ist, um eine Seite des Substrats (S) an die beheizte Walze (4) anzulegen,
- eine Abzugsvorrichtung (6) zum Abziehen der während der Pfropfungsreaktion entstandenen Salzsäure,
- eine Vorrichtung (7) zum Anlegen eines Luftmessers an die behandelte Seite des Substrats zum Entfernen des restlichen Pfropfungsreagens,
- eine Vorrichtung (8) zum Wiederaufwickeln des behandelten Substrats (S).

**2.** Maschine nach Anspruch 1, **dadurch gekennzeichnet, dass** das Einspannsystem (5a, 5b) so angeordnet ist, dass die hydroxylierte Seite (Fh) des Substrats (S) an die beheizte Walze (4) angelegt wird.

**3.** Maschine nach Anspruch 2, **dadurch gekennzeichnet, dass** sie mindestens zwei hintereinander liegende beheizte Walzen (4' 4") und zugehörige Einspannsysteme (5a', 5b', 5a", 5b") umfasst, um die hydroxylierte Seite (Fh) des Substrats zum Fördern der Pfropfungsreaktion an die beheizten Walzen anzulegen.

**4.** Maschine nach einem der Ansprüche 2 bis 3, **dadurch gekennzeichnet, dass** die Oberfläche der beheizten Walze (4, 4', 4") mit einer Rauigkeit versehen ist, um einen Spalt (e) zwischen der Walze und dem Substrat zu schaffen.

**5.** Maschine nach einem der Ansprüche 2 bis 4, **dadurch gekennzeichnet, dass** die Vorrichtung (7) zum Anlegen des Luftmessers eine Düse ist, die um einen Winkel von mehr als 30° in Bezug auf die Oberfläche des Substrats (S) geneigt ist und gegenläufig zur Ablaufrichtung des Substrats ausgerichtet ist.

**6.** Maschine nach Anspruch 1, **dadurch gekennzeichnet, dass** sie eine Verkleidungsvorrichtung (40) umfasst, die die beheizte Walze (4) umfasst, und dass das Einspannsystem (5a, 5b) so angeordnet ist, dass die der hydroxylierten Seite (Fh) entgegengesetzte Seite des Substrats (S) an die beheizte Walze (4) angelegt wird.

**7.** Maschine nach Anspruch 6, **dadurch gekennzeichnet, dass** die Vorrichtung (7) zum Anlegen des Luftmessers so am Ausgang der Verkleidungsvorrichtung (40) angeordnet ist, dass das Luftmesser die hydroxylierte Seite (Fh) des Substrats gegenläufig zur Ablaufrichtung des Substrats abbläst, wenn das Substrats an der beheizten Walze (4) anliegt.

**8.** Maschine nach Anspruch 7, **dadurch gekennzeichnet, dass** die Abzugsvorrichtung (6) am Eingang der Verkleidungsvorrichtung (40) angeordnet sind, so dass die vom Luftmesser beförderten Stoffe abgesaugt werden.

**9.** Verfahren zur Behandlung eines durchlaufenden, eine hydroxylierte Seite (Fh) aufweisenden Substrats (S) durch chromatogene Pfropfung, **dadurch gekennzeichnet, dass** es die folgenden Schritte umfasst:

(a) Aufbringen eines Pfropfungsreagens auf die hydroxylierte Seite (Fh) des Substrats (S), wobei das Reagens ein Fettsäurechlorid ist,
(b) Fördern der Pfropfungsreaktion, wobei eine Seite des Substrats (S) an eine beheizte Walze (4) angelegt wird,
(c) Abziehen der bei der Pfropfungsreaktion abgegebenen Salzsäure,
(d) Anlegen eines warmen Luftmessers an die behandelte Seite des Substrats, um das restliche Pfropfungsreagens zu entfernen,
und dass der Durchmesser, die Temperatur und die Drehzahl der beheizten Walze (4) so gewählt werden, dass die Kontaktdauer zwischen Substrat (S) und beheizter Walze (4) in etwa gleich der Dauer der Pfropfungsreaktion ist.

**10.** Verfahren nach Anspruch 9, **dadurch gekennzeichnet, dass** zum Fördern der Pfropfungsreaktion die hydroxylierte Seite (Fh) des Substrats mit einem Luftspalt (e) an die beheizte Walze (4) angelegt wird, der geeignet ist, das Pfropfungsreagenz zwischen der Walze und dem Substrat einzuschließen und die Dissipation der bei der Pfropfungsreaktion abgegebenen Salzsäure zu ermöglichen.

**11.** Verfahren nach Anspruch 10, **dadurch gekennzeichnet, dass** die Salzsäure abgezogen wird, wenn das Substrat

den Kontakt zur beheizten Walze verlässt.

**12.** Verfahren nach Anspruch 10, **dadurch gekennzeichnet, dass** der Schritt (b) zur Förderung der Reaktion durch Anlegen der hydroxylierten Seite (Fh) des Substrats (S) an mindestens zwei hintereinander liegende Walzen (4', 4") durchgeführt wird und dass der Schritt (c) des Abziehens der Salzsäure durchgeführt wird, wenn das Substrat den Kontakt zu jeder der Walzen (4', 4") verlässt.

**13.** Verfahren nach Anspruch 9, **dadurch gekennzeichnet, dass** zur Förderung der Pfropfungsreaktion die der hydroxylierten Seite entgegengesetzte Seite des Substrats an die beheizte Walze angelegt wird.

**14.** Verfahren nach Anspruch 13, **dadurch gekennzeichnet, dass** das warme Luftmesser gleichzeitig angelegt wird, so dass die behandelte Seite des Substrats gegenläufig zur Ablaufrichtung des Substrats abgeblasen wird.

**15.** Verfahren nach einem der Ansprüche 9 bis 14, **dadurch gekennzeichnet, dass** die Temperatur des warmen Luftmessers über der Temperatur der hydroxylierten Seite des Substrats während der Pfropfungsreaktion liegt.

## Claims

**1.** A machine for chromatogenous grafting treatment of a scrolling substrate (S) having a hydroxylated face (Fh), **characterised in that** it comprises:

- a winder (1) for unwinding the substrate (S),
- an application device (3) of a grafting reagent on the hydroxylated face (Fh) of the substrate, said reagent being a fatty acid chloride,
- a heating roller (4) for the development of the grafting reaction on the hydroxylated face (Fh) of the substrate, said roller (4) being provided with a bar-end system (5a, 5b) for applying a face of the substrate (S) against said heating roller (4),
- an extraction device (6) of the hydrochloric acid produced during the grafting reaction,
- an application device (7) of an air knife on the treated face of the substrate for eliminating the residual grafting reagent,
- a rewinding device (8) of the treated substrate (S) .

**2.** The machine according to claim 1, **characterised in that** the bar-end system (5a, 5b) is arranged so as to apply the hydroxylated face (Fh) of the substrate (S) against said heating roller (4).

**3.** The machine according to claim 2, **characterised in that** it comprises at least two successive heating rollers (4', 4") and respective bar-end systems (5a', 5b', 5a", 5b") for applying the hydroxylated face (Fh) of the substrate against said heating rollers for the development of the grafting reaction.

**4.** The machine according to any one of claims 2 to 3, **characterised in that** the surface of the heating roller (4, 4', 4") is provided with roughness to obtain an airgap (e) between the roller and the substrate.

**5.** The machine according to any one of claims 2 to 4, **characterised in that** the application device (7) of the air knife is a nozzle inclined at an angle greater than 30° relative to the surface of the substrate (S) and oriented counter-current to the direction of travel of the substrate.

**6.** The machine according to claim 1, **characterised in that** it comprises a fairing device (40) comprising said heating roller (4) and **in that** the bar-end system (5a, 5b) is arranged so as to apply the face of the substrate (S) opposite the hydroxylated face (Fh) against said heating roller (4).

**7.** The machine according to claim 6, **characterised in that** the application device (7) of the air knife is arranged at the outlet of the fairing device (40) so that the air knife sweeps the hydroxylated face (Fh) of the substrate counter-current to the direction of travel of the substrate when the substrate is against the heating roller (4).

**8.** The machine according to claim 7, **characterised in that** the extraction device (6) is arranged at the inlet of the fairing device (40) so as to aspirate the products transported by the air knife.

**9.** A treatment process via chromatogenous grafting of a scrolling substrate (S) having a hydroxylated face (Fh), **characterised in that** it comprises the following steps:

(a) application to the hydroxylated face (Fh) of the substrate (S) of a grafting reagent, said reagent being a fatty acid chloride,
(b) development of the grafting reaction, one face of the substrate (S) being applied against a heating roller (4),
(c) extraction of the hydrochloric acid emitted during the grafting reaction,
(d) application of a hot air knife on the treated face of the substrate so as to evacuate the residual grafting reagent, and **in that** the diameter, the temperature and the rotation speed of the heating roller (4) are selected such that the duration of contact of the substrate (S) with the heating roller (4) is substantially equal to the duration of the grafting reaction.

**10.** The process according to claim 9, **characterised in that** for the development of the grafting reaction, the hydroxylated face (Fh) of the substrate is applied against said heating roller (4) with an airgap (e) adapted to confine the grafting reagent between the roller and the substrate and to allow dissipation of the hydrochloric acid emitted during the grafting reaction.

**11.** The process according to claim 10, **characterised in that** the hydrochloric acid is extracted when the substrate leaves the contact of the heating roller.

**12.** The process according to claim 10, **characterised in that** the development step (b) of the reaction is conducted by application of the hydroxylated face (Fh) of the substrate (S) against at least two successive rollers (4', 4" ) and **in that** the extraction step (c) of the hydrochloric acid is conducted when the substrate leaves the contact of each of said rollers (4' , 4'').

**13.** The process according to claim 9, **characterised in that** for the development of the grafting reaction, the face opposite the hydroxylated face of the substrate is applied against the heating roller.

**14.** The process according to claim 13, **characterised in that** the hot air knife is applied simultaneously so as to sweep the treated face of the substrate counter-current to the direction of travel of the substrate.

**15.** The process according to any one of claims 9 to 14, **characterised in that** the temperature of the hot air knife is greater than the temperature of the hydroxylated face of the substrate during the grafting reaction.

FIG. 1

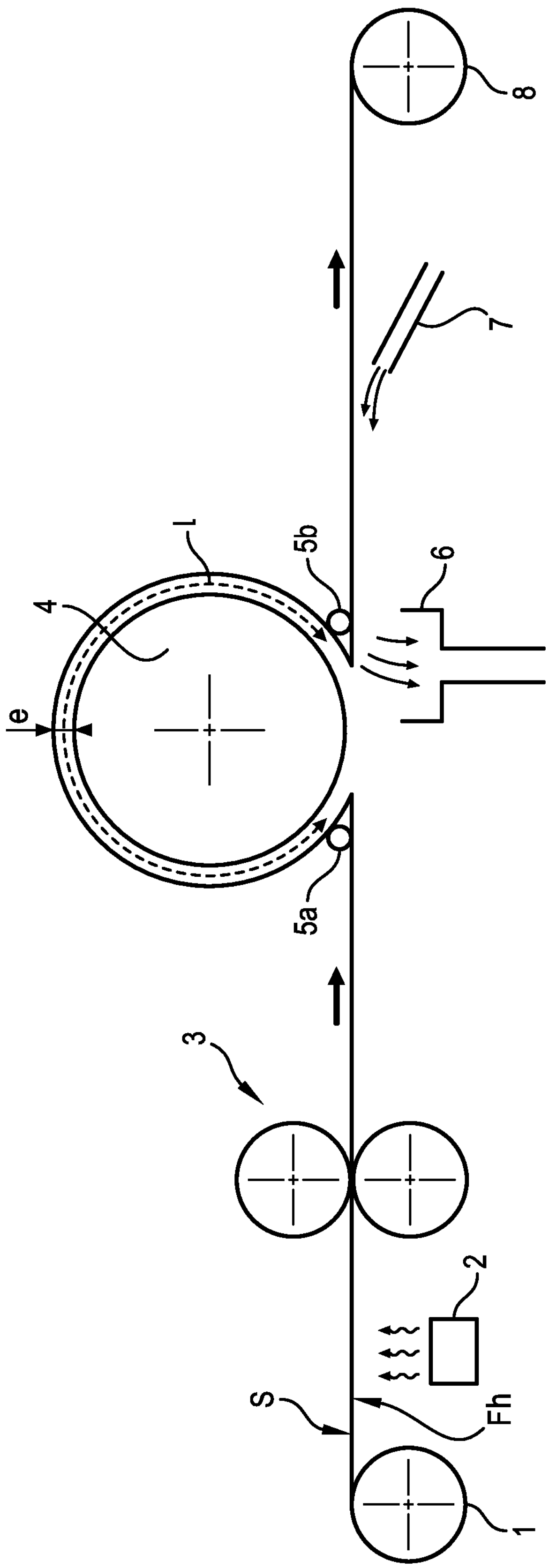

FIG. 2

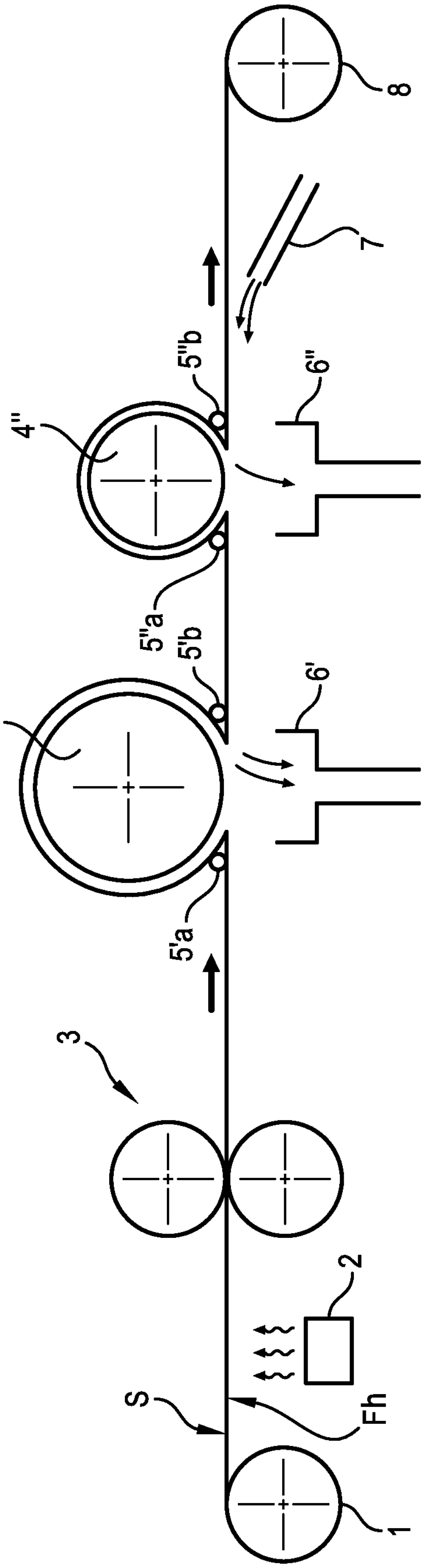

FIG. 3

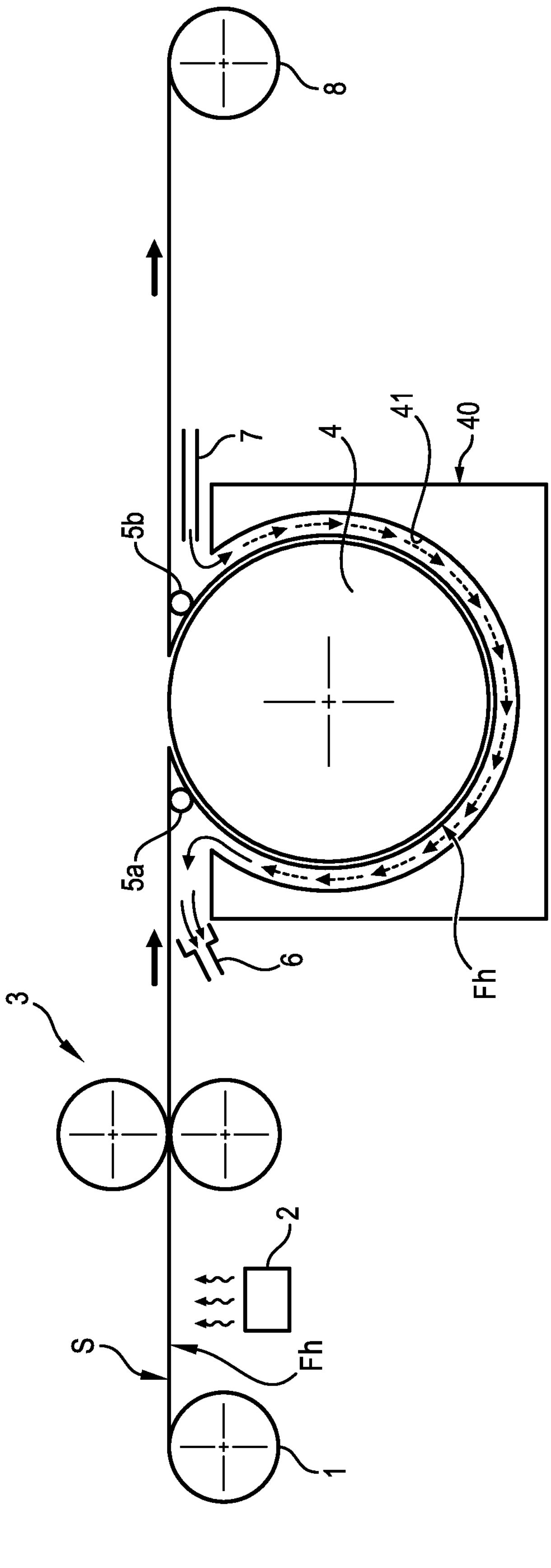

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9908784 A
- WO 2009083525 A


### Littérature non-brevet citée dans la description


- **E. DE PAOLA ; J-S. CONDORET ; D. SAMAIN.** Industrial Development of BioGuard, a New Paper Internal Sizing and Waterproofing Process. *Specialty and Technical Paper Proceedings,* 20 Juin 2000
- **S. BERLIOZ ; C. STINGA ; J. CONDORET ; D. SAMAIN.** Investigation of a Novel Principle of Chemical Grafting for Modification of Cellulose Fibers. *International Journal of Chemical Reactor Engineering,* 2008, vol. 6